# FASCICULE DE BREVET EUROPEEN

(11) **EP 4 587 659 B1**
(45) Date de publication et mention de la délivrance du brevet: **17.06.2026**
(21) Numéro de dépôt: 23767895.8
(22) Date de dépôt: 07.09.2023
(51) Int. Cl.: E04C 2/36, A01G 9/033, B31D 3/02, E04D 11/00, E04D 13/04

(54) **MODULE À PROPRIÉTÉS DRAINANTES ET SYSTÈME DE COUVERTURE INTÉGRANT DE TELS MODULES**
MODUL MIT DRAINAGEEIGENSCHAFTEN UND DACHSYSTEM MIT SOLCHEN MODULEN
MODULE HAVING DRAINING PROPERTIES, AND ROOF SYSTEM INCORPORATING SUCH MODULES

(30) Priorité: 12.09.2022 FR 2209111
(43) Date de publication de la demande: 23.07.2025
(73) Titulaire: SOPREMA, 67100 Strasbourg (FR)
(72) Inventeur: BINDSCHEDLER, Pierre-Etienne, 67000 STRASBOURG (FR); UHL, Renaud, 67700 OTTERSWILLER (FR); SINDT, Lionel, 68380 MUHLBACH SUR MUNSTER (FR)
(74) Mandataire: Ipsilon
(86) Numéro de dépôt international: PCT/EP2023/074611
(87) Numéro de publication internationale: WO 2024/056522

(56) Documents cités:
- EP-A1- 2 687 630
- EP-A1- 3 564 459
- EP-B1- 2 309 839
- EP-B1- 3 353 352
- US-A1- 2011 290 341
- SLUTZ: "Retentio - Procédé d'étanchéité pour toitures-terrasses à retenue temporaire d'eaux pluviales", CPP N° DT-13/036_FR CE, 22 June 2013 (2013-06-22), XP055525939, Retrieved from the Internet <URL:https://lotus.soprema.fr/www/reftechsop.nsf/($AllByUNID)/76CBC98476117597C1257BFD002A31D7/$File/CPP%20DT%20N°13.036_FR%20RETENTIO.pdf> [retrieved on 20181122]

## Description

La présente invention concerne le domaine des systèmes et équipements de BTP, notamment pour des ouvrages du type toiture-terrasse, circulables ou non, par exemple du type toitures végétalisées, et a pour objet un module à structure alvéolaire à propriétés drainantes et un système de couverture intégrant de tels modules.

Les modules en forme de panneaux ou de plaques à structure alvéolaire ultralégère (couramment dénommés « SAUL ») sont déjà largement connus pour des applications dans le bâtiment, les aménagements paysagers, les surfaces circulables ou analogues.

En effet, ces panneaux ou plaques structuré(e)s, avec des alvéoles présentant une forme polyédrique avec une section polygonale, préférentiellement hexagonale (en nid d'abeilles), permettent de constituer des couches intermédiaires combinant : création d'un grand volume vide, forte résistance à la compression (dans une direction perpendiculaire aux faces opposées de la plaque, c'est-à-dire dans la direction des axes des alvéoles), et légèreté.

A titre d'exemple d'application, et comme représenté schématiquement en coupe sur la figure 1 du document FR 3080635 dans un contexte de toiture-terrasse, avec retenue temporaire d'eaux pluviales, on peut citer le système dénommé « RETENTIO^{®} » (marque déposée) de la demanderesse, qui comprend des modules à structure alvéolaire ultralégère (SAUL), dénommés module RETENTIO^{®}, lesquels reposent sur une couche de drainage horizontale formé d'un géocomposite composé d'un géotextile non tissé associé à une grille extrudée, dénommé drain RETENTIO^{®}. Un géotextile (par exemple celui connu sous la désignation SOPRAFILTRE par la demanderesse) peut être rapporté sur la face supérieure des modules, lorsque le système est revêtu (couche de protection surfacique, circulable ou non par des piétons ou des véhicule, végétalisée ou plantée).

Dans ce cas, le produit alvéolaire est principalement utilisé pour créer un volume de vide entre une étanchéité et un revêtement, porteur ou non (végétalisation, chape ciment, pavés ou dalles, etc.) pour le stockage temporaire des eaux pluviales, en toiture ou en stockage enterré.

Dans une variante de réalisation, décrite notamment dans le document EP 3564459, les parois des alvéoles des modules comportent des ouvertures en forme de fentes constituant des découpes débouchant sur la face inférieure du module concerné. Ces parois munies de fentes constituent une structure à chicanes permettant de réguler l'écoulement des liquides en sous-face des modules, et permettent le cas échéant de s'affranchir d'une couche de drainage spécifique à ce niveau, notamment lorsqu'un matériau de rétention/diffusion de liquide est présent dans les alvéoles.

Le document EP 2687630A1 divulgue un module comprenant un corps en forme de plaque grillagée à structure alvéolaire et une feuille de matériau non-tissé selon le préambule de la revendication 1.

Lorsqu'une couche supérieure végétalisée ou plantée est présente un apport d'eau régulier est souhaitable, voire obligatoire, pour l'épanouissement ou au moins la persistance des plantes et de la végétation présentes.

Ainsi, dans un contexte de mise en œuvre de modules en forme de panneaux ou de plaques à structure alvéolaire ultralégère, en particulier tel qu'exposé ci-dessus, le problème posé à l'invention consiste à proposer une solution simple améliorant au moins l'hydratation d'une couche de revêtement supérieure végétalisée ou plantée, si possible en n'utilisant aucun élément additionnel et en ne modifiant pas notablement ni la fabrication, ni l'installation sur sites desdits modules.

A cet effet, l'invention a pour objet, un module comprenant un corps en forme de plaque grillagée à structure alvéolaire, à contour sensiblement rectangulaire ou carré et dont les alvéoles présentent une forme polyédrique avec une section polygonale, et un(e) feuille ou flanc de matériau non-tissé, rapporté(e) sur une des faces de la plaque, correspondant à la face supérieure de cette dernière, et recouvrant cette dernière en totalité, préférentiellement avec dépassement sur au moins deux côtés latéraux de ladite plaque
caractérisé en ce que le matériau non-tissé formant la feuille ou le flanc présente des propriétés de capillarité à l'eau et en ce que ladite feuille ou ledit flanc comporte au moins une portion latérale (5) qui s'étend au-delà du bord et le long du flanc d'au moins un desdits côtés latéraux de la plaque, ce au moins jusqu'au plan de la face inférieure de cette dernière, ladite au moins une portion de matériau non-tissé constituant une mèche pour la remontée de liquide par capillarité vers la partie de la feuille reposant sur la face supérieure de ladite plaque.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1A] est une vue en perspective de dessus d'un module selon un mode de réalisation de l'invention ;
[Fig. 1B] est une vue dessous du module de la figure 1A ;
[Fig. 1C] est une vue en élévation et en coupe selon A-A du module de la figure 1B ;
[Fig. 2A] et
[Fig. 2B] sont des vues en perspective des deux composantes constitutives du module des figures 1, à savoir la plaque à structure alvéolée (figure 3A) et la feuille de matériau non-tissé (figure 3B) ;
[Fig. 3A] et
[Fig. 3B] sont des vues respectivement en perspective et de dessous d'un assemblage de quatre modules selon les figures 1, constituant une partie d'une couche de drainage et de rétention d'eau ;
[Fig. 3C] est une vue identique à celle de la figure 4A, montrant les recouvrements par les portions latérales débordantes en forme de bandes, mais laissant apparaître par transparence à travers les feuilles de matériau non-tissé les modules aboutants ;
[Fig. 4A] est une vue en perspective de dessus, à une autre échelle, d'un module selon un deuxième mode de réalisation de l'invention ;
[Fig. 4B] est une vue dessus du module de la figure 4A ;
[Fig. 4C] est une vue en élévation latérale selon la direction B du module de la figure 1B ;
[Fig. 5A] est une vue en perspective de dessous, à une autre échelle, d'un module selon un troisième mode de réalisation de l'invention ;
[Fig. 5B] est une vue dessous du module de la figure 5A ;
[Fig. 5C] est une vue en élévation et en coupe selon **B-B** du module de la figure 5B ;
[Fig. 6] est une vue de dessous d'un module selon un quatrième mode de réalisation de l'invention, combinant des caractéristiques des trois modes de réalisation précités des figures 1 à 5 ;
[Fig. 7] est une vue schématique en coupe d'un mode de réalisation d'une toiture-terrasse végétalisée selon l'invention.

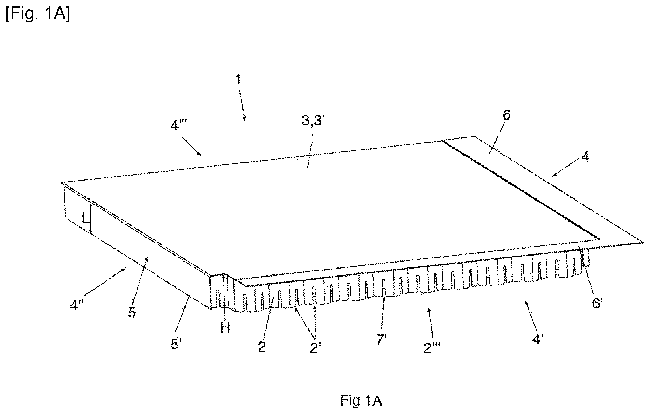

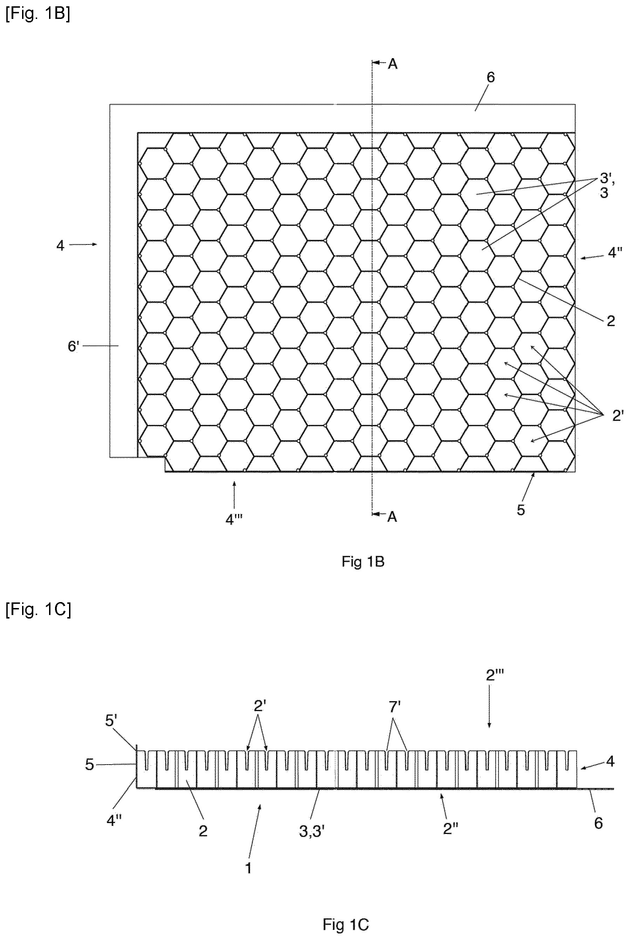

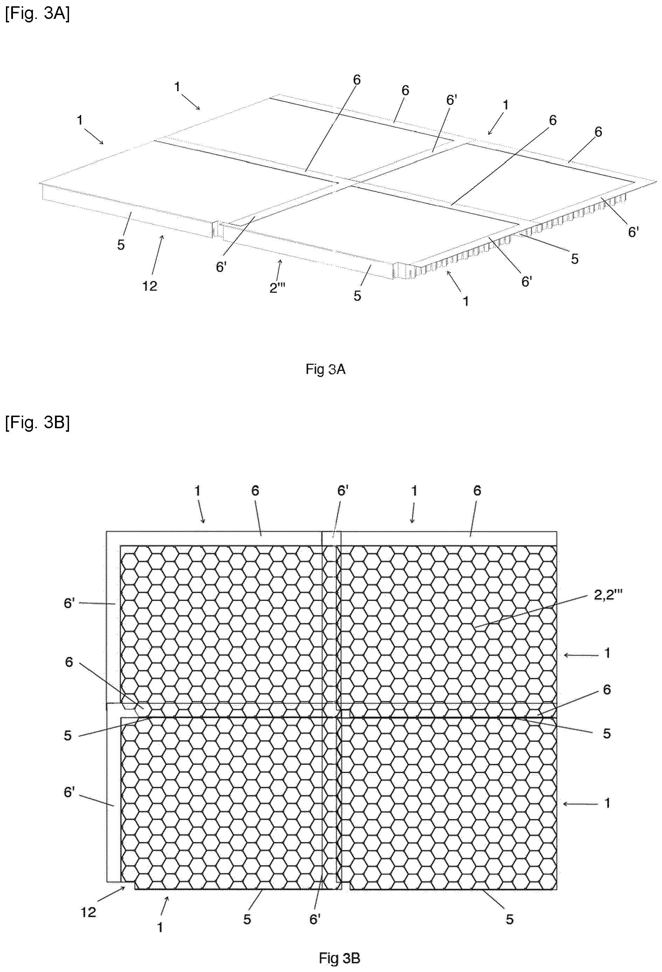

Les figures 1 et 3 à 6 illustrent un module (1) comprenant un corps (2) en forme de plaque grillagée à structure alvéolaire, à contour sensiblement rectangulaire ou carré et dont les alvéoles (2') présentent une forme polyédrique avec une section polygonale, et un(e) feuille ou flanc (3) de matériau non-tissé, rapporté(e) sur une des faces de la plaque (2), correspondant à la face supérieure (2") de cette dernière. Ce(tte) feuille ou flanc (3) recouvre en totalité et de manière continue toute la face supérieure (2") de la plaque (2), préférentiellement avec dépassement sur au moins deux côtés latéraux (4, 4', 4"') de ladite plaque (2)

Conformément à l'invention, ce module (1) est caractérisé en ce que le matériau non-tissé formant la feuille ou le flanc (3) présente des propriétés de capillarité à l'eau et en ce que ladite feuille ou ledit flanc (3) comporte au moins une portion latérale (5) qui s'étend au-delà du bord et le long du flanc d'au moins un desdits côtés latéraux (4, 4', 4",4"') de la plaque (2), ce au moins jusqu'au plan de la face inférieure (2"') de cette dernière, ladite au moins une portion (5) de matériau non-tissé constituant une mèche pour la remontée de liquide par capillarité vers la partie (3') de la feuille (3) reposant sur la face supérieure (2") de ladite plaque (2).

Grâce à ces dispositions, et notamment à la présence de la feuille ou du flanc (3) présentant les caractéristiques évoquées, l'invention fournit une solution simple et économique pour utiliser l'eau présente sous la plaque (2) creuse et ajourée (par exemple une flaque ou couche d'eau pluviale pour l'humidification d'une couche végétalisée (13), ou d'une épaisseur de substrat planté, présente sur le dessus du module (1). En effet, du fait de sa nature, de son arrangement sur la plaque et de la présence d'au moins une portion formant mèche, la feuille ou le flanc (3) peut remonter l'eau présente au niveau de la face inférieure (2"') par capillarité verticale et la diffuser horizontalement dans la partie (3') de la feuille (3) reposant sur la plaque (2) et portant la couche végétalisée, humidifiant ainsi cette dernière par en-dessous. On peut relever que la solution inventive nécessite seulement la fourniture d'au moins une bande additionnelle de matériau de la feuille (3). De plus, elle ne modifie pas la fabrication des modules (1), ni leur mode d'installation sur site.

Bien entendu, il peut être prévu une unique mèche ou plusieurs mèches, sur un côté latéral ou sur deux ou plusieurs côtés latéraux de la plaque, et avec une extension le long du côté latéral concerné qui peut être variable.

Selon une première caractéristique avantageuse, la ou au moins certaines des portion(s) formant mèche(s) (5) présente(nt) une longueur d'extension (L) au moins égale, et préférentiellement supérieure, à la hauteur (H) du flanc de la plaque (2). Par « longueur d'extension » on entend ici la longueur de la mèche qui s'étend au-delà du bord supérieur du côté concerné (dimension d'extension au-delà de la face supérieure de la plaque).

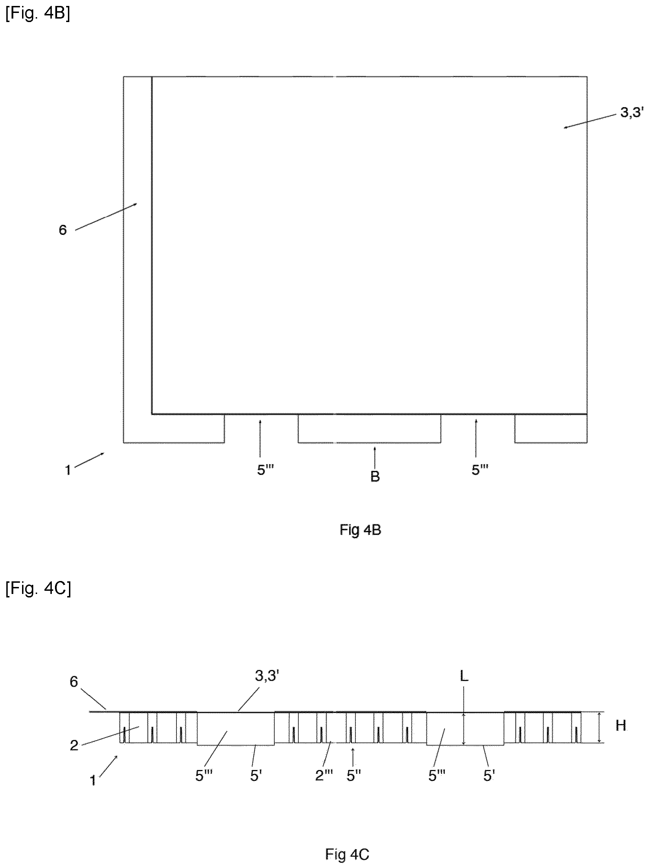

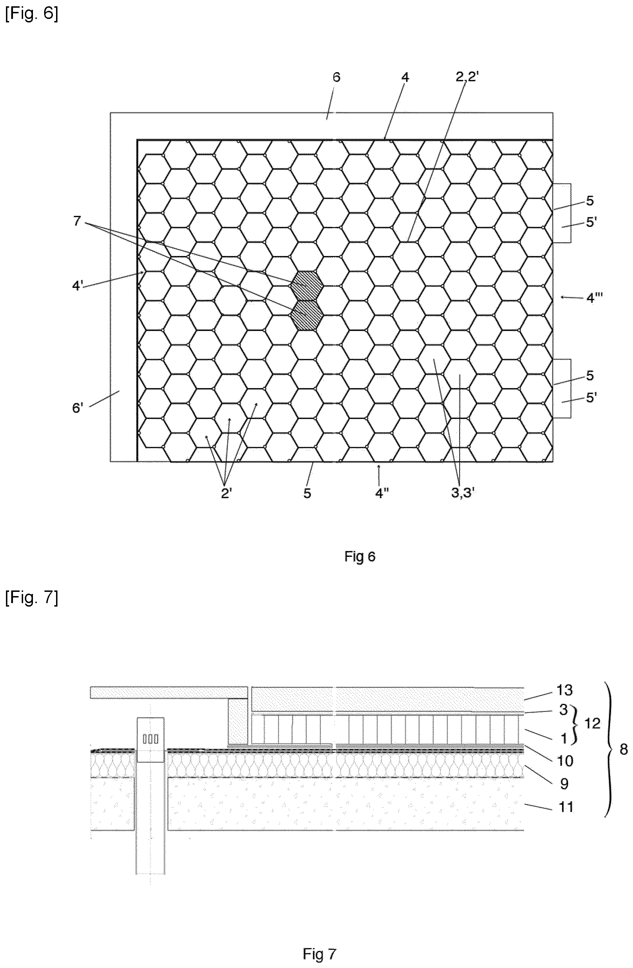

Cette disposition permet de garantir le contact de la ou chaque mèche (5) avec la surface d'appui de la plaque et donc avec l'eau sous-jacente, ce quelle que soit sa profondeur, voire de fournir une zone de contact surfacique entre mèche et eau, ou encore de permettre à une bande d'extrémité (5') de la mèche (5) concernée de couvrir une zone plus étendue en sous-face. Les figures 4C et 6 illustrent des exemples de modules (1) avec des portions (**5**) pour les lesquels L>H, et présentant en extrémité une telle bande (5'), laquelle peut être (avant mise en place du module) située dans le plan de la mèche concernée (figure 4C), ou être pliée et donc située dans un plan perpendiculaire au plan de la mèche (figure 6).

A titre de variante de réalisation simple et efficiente de l'invention, illustré à titre d'exemple sur les figures 1, le module (1) peut comprendre une unique portion (5) formant mèche située au niveau d'un seul côté latéral (4") de la plaque (2), ladite portion (5) s'étendant d'un seul tenant sur toute la longueur dudit côté (4"') ou sur une partie seulement de ce dernier. Lorsque la plaque (2) présente une forme rectangulaire, la portion (5) peut s'étendre le long d'un côté constituant une longueur dudit rectangle ou alternativement le long d'un côté formant une largeur, ce en fonction du besoin en eau, de sa localisation en sous-face, de considérations économiques et des conditions d'installation sur site.

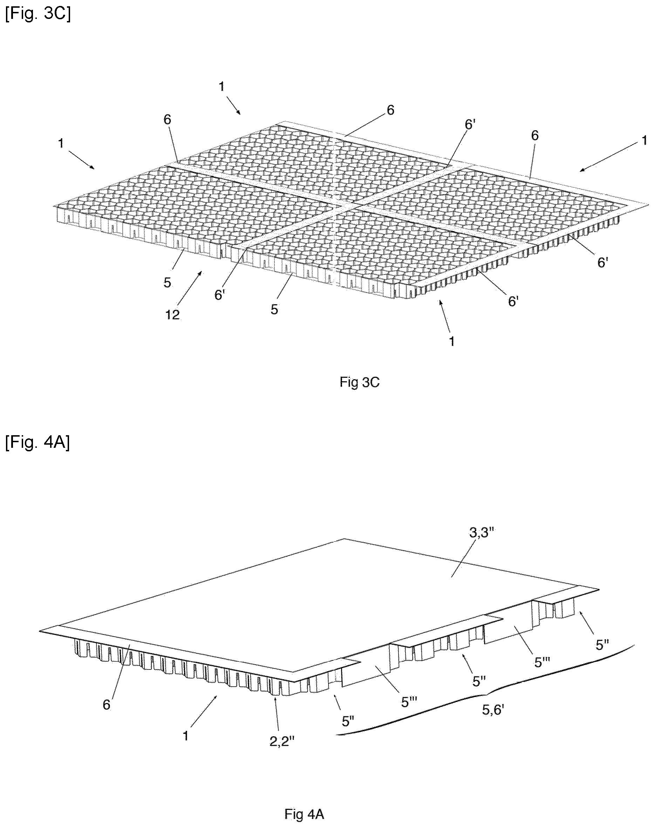

A titre de variante constructive alternative, illustrée par exemple par les figures 4, 5B et 6, le module (1) peut comprendre au moins deux portions (5) formant mèches distinctes, situées au niveau d'un même côté latéral (4") de la plaque (2) ou au niveau d'au moins deux côtés latéraux (4", 4"') différents, lesdites portions (5) s'étendant, selon le cas, sur toute la longueur du côté (4", 4'") respectivement concerné ou sur une partie seulement de ce dernier.

Comme le montre la figure 6, il peut aussi prévu éventuellement de fournir un module (1) cumulant les caractéristiques des deux variantes précitées, c'est-à-dire comportant sur un premier côté (4") une unique portion (5) formant mèche s'étendant d'un seul tenant sur toute la longueur dudit côté et sur un second côté (4"') au moins deux portions (5) formant mèches distinctes et séparées, chacune ne s'étendant que sur une partie seulement de ce côté. Dans ce cas, l'apport d'eau par capillarité provient de deux côtés différents et sa diffusion concentrique à partir de plusieurs points permet de garantir une humidification redondante de toute la partie (3') de la feuille portant la couche végétalisée.

Les figures 1 et 3 à 6, ainsi que les indications ci-dessus permettent à l'homme du métier d'appréhender la pluralité de variantes constructives possibles, et montrent les possibilités de flexibilité et d'adaptabilité, à des situations et des demandes variées, du module (1).

Comme cela ressort à titre d'exemple des figures 1 et 4 à 6, la ou chaque portion (5) formant mèche est avantageusement repliée contre le flanc ou chant du côté (4", 4"') concerné, et préférentiellement solidarisée avec au moins certaines des parois des alvéoles (2') formant ce flanc, une bande d'extrémité libre (5') de cette portion (5) dépassant préférentiellement du bord inférieur dudit flanc (figures 4 et 6).

Avec une ou des mèche(s) préfixée(s) en position, il n'y a pas de complication au moment de l'installation sur site et on peut garantir un contact linéique ou surfacique en sous-face, en fonction de la longueur (L). La solidarisation peut être réalisée de différentes manières : thermiquement, chimiquement (collage), acoustiquement (soudure par vibrations) ou encore mécaniquement (agrafage).

Comme illustré à titre d'exemple sur les figures 4 par exemple, il peut être prévu que la ou chaque portion latérale (5) comporte des découpes (5") formant des ajours autorisant un contact direct ou une imbrication partielle du flanc latéral concerné dudit module (1) avec le flanc latéral d'un autre module (1) aboutant et/ou définissant plusieurs mèches élémentaires (5"') espacées et arrangées le long du côté concerné (4", 4'").

Ces mèches élémentaires (5"') s'étendent préférentiellement le long des parois des alvéoles périphériques définissant le côté latéral concerné de la plaque, en étant par exemple collées contre ces parois.

Une telle variante constructive évite toute interférence lors de l'assemblage aboutant des plaques des modules et autorise une imbrication des plaques aboutantes au niveau de leurs côtés en contact (au droit des découpes). En outre, une mèche discontinue ou des mèches multiples et espacées ne perturbent pas la circulation de l'eau en sous-face, notamment du surplus d'eau de pluie à évacuer.

Comme le montrent les figures 1 à 6, la feuille ou le flanc de matériau non-tissé (3) comporte avantageusement deux autres portions latérales (6, 6') sous forme de bandes continues s'étendant au-delà des bords et le long de deux côtés latéraux (4 et 4') contigus de la plaque (2), formant ainsi une portion dépassant en forme de L, la ou chaque portion (5) formant mèche étant associée à l'un des deux autres côtés (4"', 4"") de cette plaque (2) -figures 1 à 3, 5 et 6- ou étant découpée dans l'une de ces deux potions latérales (6, 6') - figure 4.

Après installation mutuellement aboutante des modules (1), les deux portions latérales (6 et 6') de la feuille (3) d'un module donné recouvrent latéralement les feuilles (3) des deux autres modules (1) voisins sur les côtés concernés et chevauchent ces feuilles (3) le long de zones de bord en forme de bandes, dont certaines se prolongent par des mèches (5, 5"'). On réalise ainsi une couche continue avec le matériau non-tissé des feuilles des différents modules, cette continuité étant non seulement physique (barrière de rétention, de la couche de terre ou de substrat par exemple) mais également hydraulique ou capillaire, et autorise une diffusion de l'eau aspirée par la ou les mèches (5, 5"') d'un module vers les modules voisins aboutants.

Par un tel pontage entre modules, on peut ainsi assurer une diffusion de l'eau horizontalement entre modules de manière redondante, permettant une répartition des ressources hydriques et une sécurisation de l'approvisionnement par la multiplicité des points de prélèvement ;

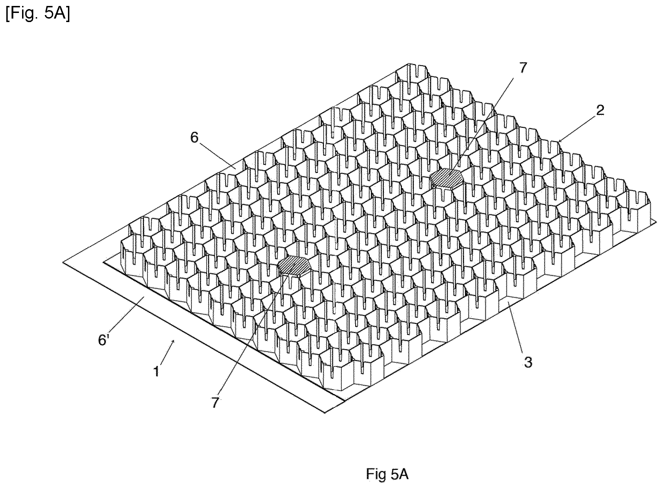

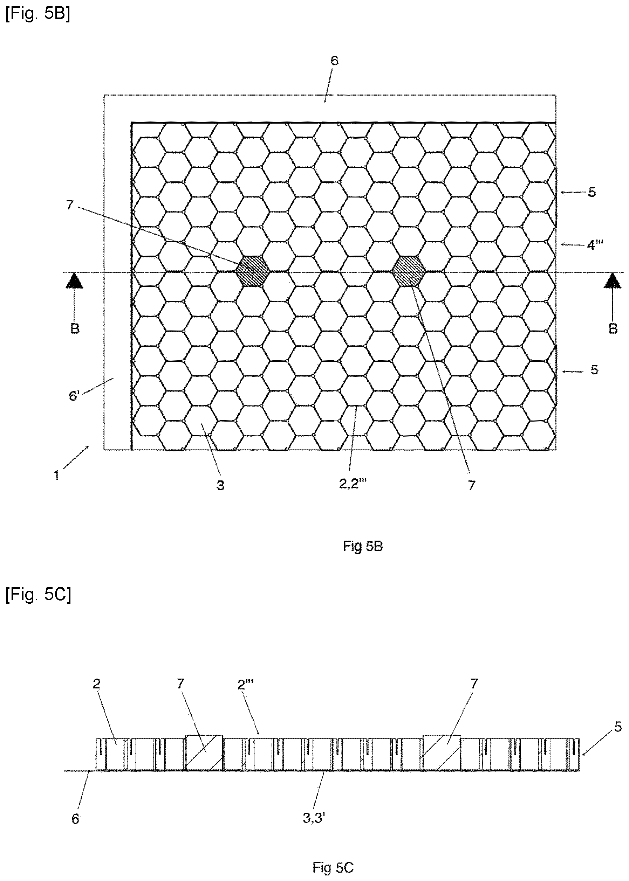

En relation avec une autre caractéristique additionnelle de l'invention, illustrée notamment sur les figures 5 et 6, il peut être prévu que la feuille ou le flanc de matériau non-tissé (3) d'un module (1) comporte, au niveau de sa partie (3') reposant sur la face supérieure (2") de la plaque (2), une ou plusieurs portion(s) ou formation(s) (7) de matériau rapportée(s), découpée(s) et/ou déformée(s) s'étendant à l'intérieur d'une alvéole ou de plusieurs alvéoles (2') située(s) en regard, préférentiellement depuis la feuille (3) au moins jusqu'au plan de la face inférieure (2‴) de ladite plaque (2), et constituant chacune une mèche pour la remontée de liquide par capillarité .

On obtient ainsi une ou plusieurs mèches (5, 7) supplémentaires situées à l'intérieur du périmètre de la face supérieur (2") de la plaque (2) et permettant de fournir un apport d'eau directement à l'intérieur de la surface du module (1) considérer, en complément de l'apport provenant de la ou des mèches (5) situées en périphérie (voir figures 5B et 6). Une telle réalisation peut être bénéfique pour des modules de grandes tailles. De plus, et en combinaison avec les différentes réalisations des mèches (5, 5"') périphériques mentionnées précédemment, cette disposition permet de multiplier davantage encore les possibilités de variantes adaptatives du module (1) selon l'invention.

Ces mèches (7) additionnelles qui s'étendent à travers la plaque (2) peuvent être constituées de la même matière que la feuille (3), et se présenter sous forme de bandelettes ou de matériau de rembourrage de l'alvéole (2') concernée, et sont en contact et éventuellement solidarisées avec la feuille (3). Elles peuvent aussi être formées d'une matière différente, injectée dans l'alvéole considérée et présentant des propriétés de capillarité.

En relation avec une application optimisée de l'invention, en particulier un ratio ressources/résultats performant, le nombre, les dimensions et l'arrangement de la ou des portion(s) (5), et éventuellement de la ou des formations (7), formant mèche(s) sont avantageusement déterminées en fonction de la forme et de la taille de la plaque (2), ainsi que des conditions de mise en œuvre dudit module (8). A cet effet, un outil du type abaque ou un outil de simulation numérique reposant sur des résultats de tests et d'expérience de terrain pourra être mis à disposition de l'installateur.

Préférentiellement, et en relation avec un mode de fabrication simple, économique et robuste, la liaison entre le corps (2) en forme de plaque grillagée à structure alvéolaire et la feuille ou le flanc (3) de matériau non-tissé de fibres synthétiques, du type géotextile, est une liaison matière, ladite plaque (2) étant surmoulée sur ce(tte) feuille ou flanc (3) et la température de fusion du matériau formant la plaque (2) étant avantageusement inférieure à la température de ramollissement du matériau des fibres du non-tissé formant la feuille ou le flanc (3).

Par « propriétés de capillarité », on entend dans la présente la faculté du matériau non-tissé de la feuille ou du flanc (3) à pouvoir acheminer de l'eau, au niveau de chaque mèche (5, 5"'), à l'encontre de la pesanteur de la face inférieure (2"') de la plaque (2) vers sa face supérieure (2"). Un tel matériau présente normalement également des propriétés de diffusion de l'eau dans un plan horizontal ou légèrement incliné, ici le plan de la portion (3') de la feuille (3), les deux propriétés étant liées. L'homme du métier saura du fait de ses connaissances dans le domaine des matériaux choisir les non-tissés adaptés à une mise en œuvre dans le cadre de l'invention, avec notamment des propriétés de capillarité suffisantes pour assurer la remonté de l'eau sur la hauteur (H), typiquement de quelques centimètres à une ou deux dizaines de centimètres.

A titre d'exemple non limitatif, un type de matériau non tissé adapté présente avantageusement un emport d'eau d'au moins 300 ml/m², avantageusement d'environ au moins 450 ml/m² et préférentiellement de l'ordre de 600 ml/m². En outre, la vitesse de diffusion de l'eau dans le matériau considéré sera telle que la diffusion sur 5 cm sera avantageusement inférieure à 3 minutes, préférentiellement inférieure à 1,5 minute, et la diffusion sur 10 cm sera avantageusement inférieure à 10 minutes, préférentiellement inférieure à 6 minutes.

Selon une variante de réalisation pratique de l'invention, la feuille ou le flanc (3) peut consister en un matériau non-tissé de fibres synthétiques avec des propriétés de capillarité à l'eau et de diffusion de l'eau, préférentiellement un géotextile, par exemple composé d'un mélange de microfibres de polyamide et de polyester liées entre elles. Un exemple typique, mais non limitatif, d'un tel géotextile est celui connu sous la désignation EVOLON^{®} (marque déposée), notamment le type 150 PK TL, de la société Freudenberg.

La plaque (2) quant à elle peut consister en du polypropylène ou de l'ABS, éventuellement au moins partiellement recyclé. Lors du surmoulage du géotextile par le matériau en fusion destiné à former la plaque, ce dernier ne pénètre pas dans le géotextile : il reste en surface et agit comme une colle de contact superficiel. Ainsi les propriétés capillaires du géotextile ne sont pas dégradées.

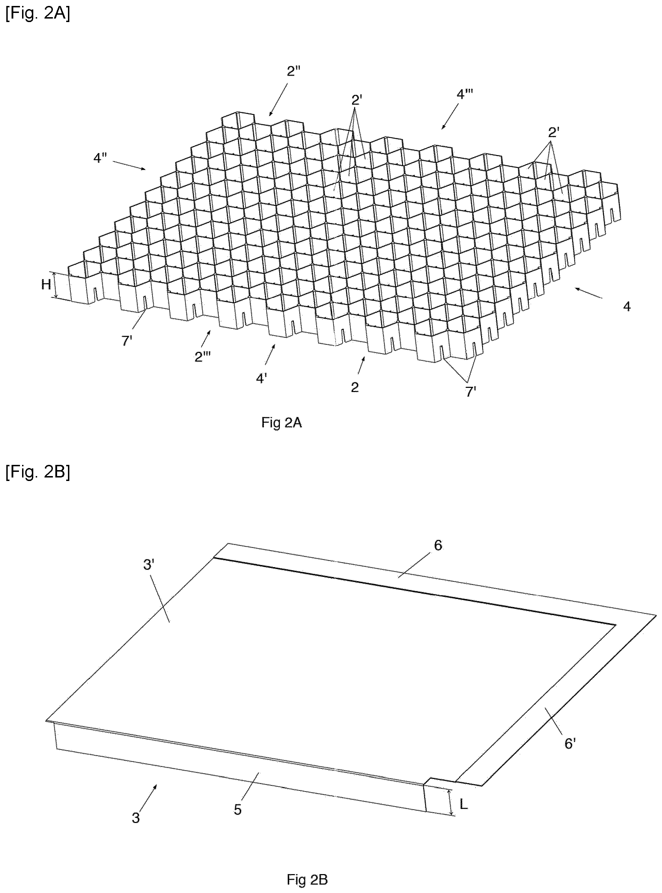

Comme le montrent les figures 1 et 2, il peut aussi être prévu qu'au moins certaines des parois des alvéoles (2'), communes à deux alvéoles ou non, comportent des découpes (7') en forme de fentes s'étendant depuis la face inférieure (2"') de la plaque (2) jusqu'à au moins mi-hauteur de la paroi concernée.

Une réalisation en accord avec cette disposition est notamment décrite dans le document FR 3080635 cité précédemment. Il est alors possible, dans le cadre d'une utilisation de modules (1) en relation avec le système RETENTIO^{®} de la demanderesse, de s'affranchir de l'utilisation du drain RETENTIO.

L'invention a également pour objet, comme le montre à titre d'exemple la figure 7, un dispositif de toiture-terrasse (8) végétalisée ou plantée, comprenant un support (9) plan, étanche ou revêtu d'une membrane d'étanchéité (10), éventuellement avec interposition d'une couche isolante (11).

Conformément à l'invention, ce dispositif (8) est caractérisé en ce qu'il comporte également une couche (12) formée par l'assemblage aboutant de modules (1) à structure alvéolaire en forme de plaques tel que décrit ci-dessus, avec chevauchement partiel des feuilles ou flancs (3) de matériau non-tissé des différents modules (1) par le biais de portions latérales (6, 6') débordantes, cette couche (12) continue formant couche de rétention temporaire, ou non, et de drainage contrôlé, d'eau et étant recouverte d'une couche de protection végétalisée ou plantée (13).

Afin de garantir un apport d'eau limitant au maximum, voire permettant de supprimer les phases d'arrosage, le support (9) et/ou la membrane d'étanchéité (10) peu(ven)t être configuré(e)(s) de manière à favoriser la formation et la conservation d'une couche ou de flaques d'eau sous la couche (12) formée de modules (1) aboutants. En variante ou en plus, un relevage de l'ouverture d'entrée du ou des déversoirs de sécurité peut aussi être considérer pour assurer une rétention d'eau suffisante.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Module (1) comprenant un corps (2) en forme de plaque grillagée à structure alvéolaire, à contour sensiblement rectangulaire ou carré et dont les alvéoles (2') présentent une forme polyédrique avec une section polygonale, et un(e) feuille ou flanc (3) de matériau non-tissé, rapporté(e) sur une des faces de la plaque (2), correspondant à la face supérieure (2") de cette dernière, et recouvrant cette dernière en totalité, préférentiellement avec dépassement sur au moins deux côtés latéraux (4, 4', 4"') de ladite plaque (2), module (1) **caractérisé en ce que** le matériau non-tissé formant la feuille ou le flanc (3) présente des propriétés de capillarité à l'eau et **en ce que** ladite feuille ou ledit flanc (3) comporte au moins une portion latérale (5) qui s'étend au-delà du bord et le long du flanc d'au moins un desdits côtés latéraux (4, 4', 4",4‴) de la plaque (2), ce au moins jusqu'au plan de la face inférieure (2"') de cette dernière, ladite au moins une portion (5) de matériau non-tissé constituant une mèche pour la remontée de liquide par capillarité vers la partie (3') de la feuille (3) reposant sur la face supérieure (2") de ladite plaque (2).

2. Module (1) selon la revendication 1, **caractérisé en ce que** la ou au moins certaines des portion(s) formant mèche(s) (5) présente(nt) une longueur d'extension (L) au moins égale, et préférentiellement supérieure, à la hauteur (H) du flanc de la plaque (2).

3. Module (1) selon la revendication 1 ou 2, **caractérisé en ce qu'**il comprend une unique portion (5) formant mèche située au niveau d'un seul côté latéral (4") de la plaque (2), ladite portion (5) s'étendant d'un seul tenant sur toute la longueur dudit côté (4"') ou sur une partie seulement de ce dernier.

4. Module (1) selon la revendication 1 ou 2, **caractérisé en ce qu'**il comprend au moins deux portions (5) formant mèches distinctes, situées au niveau d'un même côté latéral (4") de la plaque (2) ou au niveau d'au moins deux côtés latéraux (4", 4‴) différents, lesdites portions (5) s'étendant, selon le cas, sur toute la longueur du côté (4", 4"') respectivement concerné ou sur une partie seulement de ce dernier.

5. Module (1) selon l'une quelconque des revendications 1 à 4, **caractérisé en ce que** la ou chaque portion (5) formant mèche est repliée contre le flanc du côté (4", 4‴) concerné, et préférentiellement solidarisée avec au moins certaines des parois des alvéoles (2') formant ce flanc, une bande d'extrémité libre (5') de cette portion (5) dépassant éventuellement du bord inférieur dudit flanc.

6. Module (1) selon l'une quelconque des revendications 1 à 5, **caractérisé en ce que** la ou chaque portion latérale (5) comporte des découpes (5") formant des ajours autorisant un contact direct ou une imbrication partielle du flanc latéral concerné dudit module (1) avec le flanc latéral d'un autre module (1) aboutant et/ou définissant plusieurs mèches élémentaires espacées et arrangées le long du côté concerné (4", 4"').

7. Module (1) selon l'une quelconque des revendications 1 à 6, **caractérisé en ce que** la feuille ou le flanc de matériau non-tissé (3) comporte deux autres portions latérales (6, 6') sous forme de bandes continues s'étendant au-delà des bords et le long de deux côtés latéraux (4 et 4') contigus de la plaque (2), formant ainsi une portion dépassant en forme de L, la ou chaque portion (5) formant mèche étant associée à l'un des deux autres côtés (4"', 4"") de cette plaque (2) ou étant découpée dans l'une de ces deux portions latérales (6, 6').

8. Module (1) selon l'une quelconque des revendications 1 à 7, **caractérisé en ce que** la feuille ou le flanc de matériau non-tissé (3) comporte, au niveau de sa partie (3') reposant sur la face supérieure (2") de la plaque (2), une ou plusieurs portion(s) ou formation(s) (7) de matériau rapportée(s), découpée(s) et/ou déformée(s) s'étendant à l'intérieur d'une alvéole ou de plusieurs alvéoles (2') située(s) en regard, préférentiellement de ladite feuille (3) au moins jusqu'au plan de la face inférieure (2‴) de ladite plaque (2), et constituant chacune une mèche pour la remontée de liquide par capillarité .

9. Module (1) selon l'une quelconque des revendications 1 à 8, **caractérisé en ce que** la liaison entre le corps (2) en forme de plaque grillagée à structure alvéolaire et la feuille ou le flanc (3) de matériau non-tissé de fibres synthétiques, du type géotextile, est une liaison matière, ladite plaque (2) étant surmoulée sur ce(tte) feuille ou flanc (3), la température de fusion du matériau formant la plaque (2) étant avantageusement inférieure à la température de ramollissement du matériau des fibres du non-tissé formant la feuille ou le flanc (3).

10. Module (1) selon l'une quelconque des revendications 1 à 9, **caractérisé en ce que** la feuille ou le flanc (3) consiste en un matériau non-tissé de fibres synthétiques avec des propriétés de capillarité à l'eau et de diffusion de l'eau, préférentiellement un géotextile, par exemple composé d'un mélange de microfibres de polyamide et de polyester liées entre elles, la plaque (2) consistant avantageusement en du polypropylène ou de l'ABS, éventuellement au moins partiellement recyclé.

11. Module (1) selon l'une quelconque des revendications 1 à 10, **caractérisé en ce qu'**au moins certaines des parois des alvéoles (2'), communes à deux alvéoles ou non, comportent des découpes (7') en forme de fentes s'étendant depuis la face inférieure (2"') de la plaque (2) jusqu'à au moins mi-hauteur de la paroi concernée.

12. Dispositif de toiture-terrasse (8) végétalisée ou plantée, comprenant un support (9) plan, étanche ou revêtu d'une membrane d'étanchéité (10), éventuellement avec interposition d'une couche isolante (11), dispositif (8) **caractérisé en ce qu'**il comporte également une couche (12) formée par l'assemblage aboutant de modules (1) à structure alvéolaire en forme de plaques selon l'une quelconque des revendications 1 à 11, avec chevauchement partiel des feuilles ou flancs (3) de matériau non-tissé des différents modules (1) par le biais de portions latérales (6, 6') débordantes, cette couche (12) continue formant couche de rétention temporaire, ou non, et de drainage contrôlé, d'eau et étant recouverte d'une couche de protection végétalisée ou plantée (13).

13. Dispositif selon la revendication 12, **caractérisé en ce que** le support (9) et/ou la membrane d'étanchéité (10) est(sont) configuré(e)(s) de manière à favoriser la formation et la conservation d'une couche ou de flaques d'eau sous la couche (12) formée de modules (1) aboutants.

## Patentansprüche

1. Modul (1), umfassend einen Körper (2) in Form einer Gitterplatte mit Wabenstruktur, mit im Wesentlichen rechteckiger oder quadratischer Kontur, dessen Waben (2') eine polyedrische Form mit einem polygonalen Querschnitt aufweisen, und eine Lage oder Flanke (3) aus Vliesmaterial, die auf eine der Flächen der Platte (2), die deren oberer Fläche (2") entspricht, aufgesetzt ist und Letztere vollständig bedeckt, bevorzugt mit Überstand auf mindestens zwei seitlichen Seiten (4, 4', 4"') der Platte (2), wobei das Modul (1) **dadurch gekennzeichnet ist, dass** das die Lage oder Flanke (3) bildende Vliesmaterial Kapillaritätseigenschaften gegenüber Wasser aufweist, und dass die Lage oder Flanke (3) mindestens einen seitlichen Abschnitt (5) umfasst, der sich über den Rand hinaus und entlang der Flanke mindestens einer der seitlichen Seiten (4, 4', 4",4"') der Platte (2) erstreckt, und dies mindestens bis zu der Ebene der unteren Fläche (2"') von Letzterer, wobei der mindestens eine Abschnitt (5) aus Vliesmaterial einen Docht zum Aufsteigen von Flüssigkeit durch Kapillarwirkung zu dem Teil (3') der Lage (3) hin bildet, der auf der oberen Fläche (2") der Platte (2) aufliegt.

2. Modul (1) nach Anspruch 1, **dadurch gekennzeichnet, dass** der oder mindestens einige Docht(e) bildende Abschnitt(e) (5) eine Erstreckungslänge (L) aufweist (aufweisen), die mindestens gleich und vorzugsweise größer als die Höhe (H) der Flanke der Platte (2) ist.

3. Modul (1) nach Anspruch 1 oder 2, **dadurch gekennzeichnet, dass** es einen einzigen Docht bildenden Abschnitt (5) umfasst, der an einer einzigen seitlichen Seite (4") der Platte (2) gelegen ist, wobei sich der Abschnitt (5) durchgängig über die gesamte Länge der Seite (4"') oder nur über einen Teil von Letzterer erstreckt.

4. Modul (1) nach Anspruch 1 oder 2, **dadurch gekennzeichnet, dass** es mindestens zwei unterschiedliche Dochte bildende Abschnitte (5) umfasst, die an einer selben seitlichen Seite (4") der Platte (2) oder an mindestens zwei verschiedenen seitlichen Seiten (4", 4‴) gelegen sind, wobei sich die Abschnitte (5) je nach Fall über die gesamte Länge der jeweils betroffenen Seite (4", 4"') oder nur über einen Teil von Letzterer erstrecken.

5. Modul (1) nach einem der Ansprüche 1 bis 4, **dadurch gekennzeichnet, dass** der oder jeder einen Docht bildende Abschnitt (5) gegen die Flanke der betroffenen Seite (4", 4‴) umgelegt ist und vorzugsweise an mindestens einigen der Wände der Waben (2'), die diese Flanke bilden, befestigt ist, wobei ein freier Endstreifen (5') dieses Abschnitts (5) gegebenenfalls über den unteren Rand der Flanke übersteht.

6. Modul (1) nach einem der Ansprüche 1 bis 5, **dadurch gekennzeichnet, dass** der oder jeder seitliche Abschnitt (5) Ausschnitte (5") aufweist, die Durchbrüche bilden, die einen direkten Kontakt oder eine partielle Verschachtelung der betroffenen seitlichen Flanke des Moduls (1) mit der seitlichen Flanke eines anderen anstoßenden Moduls (1) zulassen und/oder mehrere beabstandete und entlang der betroffenen Seite (4", 4‴) angeordnete elementare Dochte definieren.

7. Modul (1) nach einem der Ansprüche 1 bis 6, **dadurch gekennzeichnet, dass** die Lage oder Flanke aus Vliesmaterial (3) zwei weitere seitliche Abschnitte (6, 6') in Form von durchgehenden Streifen aufweist, die sich über die Ränder hinaus und entlang von zwei angrenzenden seitlichen Seiten (4 und 4') der Platte (2) erstrecken, so dass sie einen L-förmigen überstehenden Abschnitt bilden, wobei der oder jeder einen Docht bildende Abschnitt (5) einer der beiden anderen Seiten (4‴, 4′‴) dieser Platte (2) zugeordnet ist oder aus einem dieser beiden seitlichen Abschnitte (6, 6') ausgeschnitten ist.

8. Modul (1) nach einem der Ansprüche 1 bis 7, **dadurch gekennzeichnet, dass** die Lage oder Flanke aus Vliesmaterial (3) an ihrem auf der oberen Fläche (2") der Platte (2) aufliegenden Teil (3') eine(n) oder mehrere aufgesetzte(n), ausgeschnittene(n) und/oder verformte(n) Abschnitt(e) oder Formation(en) (7) aufweist, der(die) sich im Inneren einer Wabe oder mehrerer Waben (2'), die vorzugsweise gegenüber der Lage (3) gelegen sind, mindestens bis zu der Ebene der unteren Fläche (2‴) der Platte (2) erstreckt(erstrecken) und jeweils einen Docht zum Aufsteigen von Flüssigkeit durch Kapillarwirkung darstellen.

9. Modul (1) nach einem der Ansprüche 1 bis 8, **dadurch gekennzeichnet, dass** die Verbindung zwischen dem Körper (2) in Form einer Gitterplatte mit Wabenstruktur und der Lage oder Flanke (3) aus Vliesmaterial aus synthetischen Fasern, vom Typ Geotextil, eine stoffliche Verbindung ist, wobei die Platte (2) an diese Lage oder Flanke (3) angespritzt ist, wobei der Schmelzpunkt des die Platte (2) bildenden Materials vorteilhafterweise niedriger als der Erweichungspunkt des Materials der Fasern des die Lage oder Flanke (3) bildenden Vlieses ist.

10. Modul (1) nach einem der Ansprüche 1 bis 9, **dadurch gekennzeichnet, dass** die Lage oder Flanke (3) aus einem Vliesmaterial aus synthetischen Fasern mit Kapillaritätseigenschaften gegenüber Wasser und Wasserdiffusionseigenschaften, vorzugsweise aus einem Geotextil, besteht, das beispielsweise aus einem Gemisch aus untereinander gebundenen Polyamid- und Polyestermikrofasern zusammengesetzt ist, wobei die Platte (2) vorteilhafterweise aus Polypropylen oder ABS besteht, das gegebenenfalls mindestens teilweise recycelt ist.

11. Modul (1) nach einem der Ansprüche 1 bis 10, **dadurch gekennzeichnet, dass** mindestens einige der Wände der Waben (2'), die zwei Waben gemeinsam sind oder nicht, Ausschnitte (7') in Form von Schlitzen aufweisen, die sich von der unteren Fläche (2‴) der Platte (2) aus mindestens bis zur halben Höhe der betroffenen Wand erstrecken.

12. Vorrichtung (8) für ein begrüntes oder bepflanztes Flachdach, umfassend einen ebenen Träger (9), der dicht ist oder mit einer Dichtungsbahn (10) überzogen ist, gegebenenfalls mit einer dazwischen angeordneten Dämmschicht (11), wobei die Vorrichtung (8) **dadurch gekennzeichnet ist, dass** sie auch eine Schicht (12) aufweist, die durch die anstoßende Anordnung von Modulen (1) mit Wabenstruktur in Form von Platten nach einem der Ansprüche 1 bis 11 gebildet wird, mit teilweiser Überlappung der Lagen oder Flanken (3) aus Vliesmaterial der verschiedenen Module (1) durch überstehende seitliche Abschnitte (6, 6'), wobei diese durchgehende Schicht (12) eine Schicht zum vorübergehenden oder nicht vorübergehenden Zurückhalten und zur kontrollierten Drainage von Wasser bildet und mit einer begrünten oder bepflanzten Schutzschicht (13) bedeckt ist.

13. Vorrichtung nach Anspruch 12, **dadurch gekennzeichnet, dass** der Träger (9) und/oder die Dichtungsbahn (10) so ausgebildet ist(sind), dass er(sie) die Bildung und Aufrechterhaltung einer Wasserschicht oder -lache unter der aus anstoßenden Modulen (1) gebildeten Schicht (12) begünstigt(begünstigen).

## Claims

1. Module (1) comprising a body (2) in the form of a grid plate with a cellular structure and a substantially rectangular or square contour, the cells (2') of which have a polyhedral shape with a polygonal cross-section, and a sheet or flank (3) of non-woven material, attached to one of the faces of the plate (2), corresponding to the upper face (2") of the latter, and covering the latter in full, preferably protruding over at least two lateral sides (4, 4', 4‴) of said plate (2),
the module (1) being **characterized in that** the non-woven material forming the sheet or flank (3) has water capillary properties and **in that** said sheet or flank (3) has at least one side portion (5) extending beyond the edge and along the flank of at least one of said lateral sides (4, 4', 4", 4‴) of the plate (2) at least as far as the plane of the lower face (2‴) of the latter, said at least one portion (5) of non-woven material forming a wick for lifting liquid by capillary action towards the part (3') of the sheet (3) resting on the upper face (2") of said plate (2).

2. Module (1) according to Claim 1, **characterized in that** the or at least some of the wick-forming portions (5) have an extension length (L) at least equal to, and preferably greater than, the height (H) of the flank of the plate (2).

3. Module (1) according to Claim 1 or 2, **characterized in that** it comprises a single wick-forming portion (5) located on a single lateral side (4") of the plate (2), said portion (5) extending in one piece along the entire length of said side (4‴) or along only a part thereof.

4. Module (1) according to Claim 1 or 2, **characterized in that** it comprises at least two distinct wick-forming portions (5) located on one and the same lateral side (4") of the plate (2) or on at least two different lateral sides (4", 4‴), said portions (5) extending, depending on the case, over the entire length of the respective side (4", 4‴) or over only a part thereof.

5. Module (1) according to any one of Claims 1 to 4, **characterized in that** the or each wick-forming portion (5) is folded back against the flank of the respective side (4", 4‴), and preferably secured to at least some of the walls of the cells (2') forming this flank, a free end strip (5') of this portion (5) possibly protruding from the lower edge of said flank.

6. Module (1) according to any one of Claims 1 to 5, **characterized in that** the or each side portion (5) includes cutouts (5'') forming openings enabling direct contact or partial interlocking of the respective lateral flank of said module (1) with the lateral flank of another abutting module (1) and/or defining several elementary wicks spaced apart and arranged along the respective side (4'', 4‴).

7. Module (1) according to any one of Claims 1 to 6, **characterized in that** the sheet or flank (3) of non-woven material includes two other side portions (6, 6') in the form of continuous strips extending beyond the edges and along two contiguous lateral sides (4 and 4') of the plate (2), thereby forming an L-shaped protruding portion, the or each wick-forming portion (5) being associated with one of the other two sides (4‴, 4′‴) of this plate (2) or being cut out from one of these two side portions (6, 6').

8. Module (1) according to any one of Claims 1 to 7, **characterized in that** the sheet or flank (3) of non-woven material includes, on the part (3') thereof resting on the upper face (2") of the plate (2), one or more portions or formations (7) of attached, cut and/or deformed material extending inside a cell or cells (2') located opposite, preferably from said sheet (3) at least as far as the plane of the lower face (2‴) of said plate (2), and each constituting a wick for lifting liquid by capillary action.

9. Module (1) according to any one of Claims 1 to 8, **characterized in that** the connection between the body (2) in the form of a grid plate with a cellular structure and the sheet or flank (3) of non-woven geotextile material made of synthetic fibres is a material connection, said plate (2) being overmoulded on said sheet or flank (3), the melting temperature of the material forming the plate (2) being advantageously lower than the softening temperature of the material of the fibres of the non-woven material forming the sheet or flank (3).

10. Module (1) according to any one of Claims 1 to 9, **characterized in that** the sheet or flank (3) consists of a non-woven material of synthetic fibres with water capillary and water diffusion properties, preferably a geotextile, for example composed of a mixture of polyamide and polyester microfibres bonded together, the plate (2) advantageously being made of polypropylene or ABS, optionally at least partially recycled.

11. Module (1) according to any one of Claims 1 to 10, **characterized in that** at least some of the walls of the cells (2'), common to two cells or otherwise, include slot-shaped cutouts (7') extending from the lower face (2‴) of the plate (2) to at least halfway up the respective wall.

12. Green or planted flat roof device (8) comprising a flat support (9) which is watertight or covered with a watertight membrane (10), optionally with an interposed insulating layer (11), said device (8) being **characterized in that** it also includes a layer (12) formed by the abutting assembly of modules (1) with a cellular structure in the form of plates according to any one of Claims 1 to 11, with partial overlapping of the sheets or flanks (3) of non-woven material of the different modules (1) by means of projecting side portions (6, 6'), this continuous layer (12) forming a temporary or non-temporary water retention and controlled-drainage layer, and being covered with a green or planted protective layer (13).

13. Device according to Claim 12, **characterized in that** the support (9) and/or the watertight membrane (10) is/are designed in such a way as to promote the formation and preservation of a layer or pools of water under the layer (12) formed by abutting modules (1).
